# EUROPEAN PATENT APPLICATION

(11) **EP 4 507 225 A1**
(43) Date of publication of application: **12.02.2025**
(21) Application number: 23784351.1
(22) Date of filing: 07.04.2023
(51) Int. Cl.: H04L 1/18

(54) **METHOD FOR RECEIVING OAM CODE BLOCK, AND DEVICE**

(30) Priority: 07.04.2022 CN 202210362675
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HAN, Liuyan, Beijing 100032 (CN); LI, Han, Beijing 100032 (CN); ZHANG, Dechao, Beijing 100032 (CN)
(74) Representative: Murgitroyd & Company
(86) International application number: PCT/CN2023/086874
(87) International publication number: WO 2023/193788

(57) **Abstract**

A method and a device for receiving an Operation Administration and Maintenance (OAM) block are provided. The method includes: determining, by a first device, a window for detecting an OAM block at a path layer of a Metro Transport Network (MTN); detecting, by the first device, the OAM block in a block stream within the window.

## Description

### CROSS-REFERENCE TO RELATED APPLICATION

The present application claims a priority to the Chinese patent application No. 202210362675.5 filed in China on April 7, 2022, a disclosure of which is incorporated herein by reference in its entirety.

### TECHNICAL FIELD

The present disclosure relates to the field of data communications technology, and in particular, to a method and a device for receiving an Operation Administration and Maintenance (OAM) block.

### BACKGROUND

With the development of the 5th Generation (5G) mobile communications system and increase of users in vertical industries, a demand for network slicing has increased. The industry has conducted many beneficial explorations in Ethernet-based slicing isolation technology. For example, the Flex Ethernet (FlexE) technology provides a slicing mechanism based on an Ethernet physical interface, which can provide an effective interface-level isolation mechanism. However, the FlexE is currently only an interface-level technology and cannot meet a networking requirement of a carrier network. A Metro Transport Network (MTN) is a new transport network technology system defined for a new service requirement such as the 5G service requirement. It can achieve effective integration of time division multiplexing (TDM) and packet switching, and consists of a section layer and a path layer. The section layer of the MTN reuses the FlexE logic to support port binding, and is compatible with a Ethernet underlying protocol stack and a standard Ethernet optical module; the path layer of the MTN supports TDM switching based on a 66B block, has a complete end-to-end Operation Administration and Maintenance (OAM) mechanism, and supports cross-multiplexing of any Nx5G channelized customer signals. The 66B coding is a standard coding method that reduces coding overhead and hardware complexity. The 66B coding encodes 64 bits of data or control information into a 66-bit block (block) for transmission. The first two bits of the 66 bits represent the synchronization header, which is mainly used for data alignment at a receiving end and synchronization of a received data bit stream.

The OAM at the path layer of the MTN technology is carried by the 66B block, including a Basic message block (B block), an Automatic Protection Switching (APS) block (A block), a Low priority message block (L block) and other types, and is inserted and carried in a code stream according to a certain period. Through an appropriate OAM function, link connectivity detection and performance detection can be realized, protection switching can be triggered in time, and the operation, management and maintenance functions of each layer of the network can be realized.

As an operation and maintenance mechanism, the OAM at the path layer of the MTN needs to be correctly detected and received. In prior art, the OAM block detection needs to be performed block by block on the block stream, which requires large hardware resource and is complex to implement.

### SUMMARY

At least one embodiment of the present disclosure provides a method and a device for receiving an Operation Administration and Maintenance (OAM) block, which is used to achieve more efficient OAM block detection and reduce the processing resource required for detection.

To solve the above technical problems, the present disclosure is implemented as follows.

In a first aspect, an embodiment of the present disclosure provides a method for receiving an OAM block, including:
determining, by a first device, a window used for detecting the OAM block at a path layer of a Metro Transport Network (MTN);
detecting, by the first device, the OAM block in a block stream within the window.

Optionally, the determining, by the first device, the window used for detecting the OAM block at the path layer of the MTN includes:
after the first device has detected at least one OAM block, determining, by the first device, the window based on a location of the detected OAM block and a period of the OAM block.

Optionally, the determining the window based on the location of the detected OAM block and the period of the OAM block includes:
determining a location point of the OAM block based on the location of the detected OAM block and the period of the OAM block; taking each time window that includes the location point as the window, wherein the location point occurs periodically.

Optionally, a length of the window is determined based on a preset proportion of a period of the OAM block.

Optionally, the method further includes:
in the case that a period of the OAM block changes, adjusting a location and/or a length of the window based on the changed period of the OAM block.

Optionally, before the determining the window used for detecting the OAM block at the path layer of the MTN, the method further including:
performing, by the first device based on a control block field and an O code field, detection on the block stream in a block by block manner, to detect at least one OAM block.

Optionally, the method further includes:
obtaining a first detection result of the OAM block within each window;
declaring an OAM loss defect when the first detection result meets a first condition.

Optionally, the first condition includes at least one of the followings:
that a quantity of consecutive windows in which the OAM block is not detected reaches a first amount;
that a quantity of windows in which the OAM block is not detected reaches a third amount within consecutive detection windows of a second amount, wherein the third amount is less than the second amount; or
that no OAM block is detected within a first period.

Optionally, after declaring the OAM loss defect, the method further including:
obtaining a second detection result of the OAM block within each window;
clearing the OAM loss defect when the second detection result meets a second condition.

Optionally, the second condition includes at least one of the followings:
that a quantity of consecutive windows in which the OAM block is detected reaches a fourth amount;
that a quantity of windows in which the OAM block is detected reaches a sixth amount within consecutive detection windows of a fifth amount, wherein the sixth amount is less than the fifth amount; or
that the OAM block is detected within a second period.

Optionally, the method further includes:
the OAM block being detected indicates that the OAM block has been detected within the window, and a type of the detected OAM block matches a transmission pattern of the type of the OAM block;
the OAM block being not detected indicates that no OAM block has been detected within the window, or a type of the OAM block detected within the window does not match the transmission pattern of the type of the OAM block.

Optionally, the method further includes:
with respect to a preset type of the OAM block, obtaining a third detection result of the preset type of the OAM block within each first window, wherein the first window is a window used for detecting the preset type of the OAM block;
declaring a preset type of an OAM loss defect when the third detection result meets a third condition.

Optionally, the third condition includes at least one of the followings:
that a quantity of consecutive first windows in which the preset type of the OAM block is not detected reaches a seventh amount;
that a quantity of first windows in which the preset type of the OAM block is not detected reaches a ninth amount within consecutive first detection windows of an eighth amount, wherein the ninth amount is less than the eighth amount; or
that no preset type of OAM block is detected within a third period.

Optionally, after declaring the preset type of the OAM loss defect, the method further including:
with respect to the preset type of the OAM block, obtaining a fourth detection result of the preset type of the OAM block within each first window;
clearing the preset type of the OAM loss defect when the fourth detection result meets a fourth condition.

Optionally, the fourth condition includes at least one of the followings:
that a quantity of consecutive first windows in which the preset type of the OAM block is detected reaches a tenth amount;
that a quantity of first windows in which the preset type of the OAM block is detected reaches a twelfth amount within consecutive first detection windows of an eleventh amount, wherein the twelfth amount is less than the eleventh amount; or

Optionally, that the preset type of the OAM block is detected within a fourth period.

Optionally, with respect to different types of the OAM blocks, respective conditions for detecting OAM block loss are the same or different.

In a second aspect, an embodiment of the present disclosure provides a communication device, including:
a first determination module, configured to determine a window used for detecting an Operation Administration and Maintenance (OAM) block at a path layer of a Metro Transport Network (MTN);
a first detection module, configured to detect the OAM block in a block stream within the window.

In a third aspect, an embodiment of the present disclosure provides a communication device, including: a processor, a memory, and a program stored in the memory and used to be executed by the processor. The program is configured to cause a processor to perform the steps of the method in the first aspect.

In a fourth aspect, an embodiment of the present disclosure provides a processor-readable storage medium storing a program, wherein the program is configured to cause a processor to execute the steps of the method described above.

Compared to the related art, a method and a device for receiving an Operation Administration and Maintenance (OAM) block provided by the present disclosure set a window based on a characteristic of periodic transmission of the OAM block at the path layer of the MTN and a characteristic of a block frame format, and detect the OAM block only within the window, thereby avoiding the problems of the large hardware resource required for detection and the complex implementation caused by detecting the OAM block in a block by block manner. This achieves more effective OAM block detection and reduces the processing resource required for the detection.

### BRIEF DESCRIPTION OF THE DRAWINGS

By reading the detailed description of the preferred embodiments below, various other advantages and benefits will become apparent to those skilled in the art. The accompanying drawings are only for the purpose of illustrating the preferred embodiment and are not to be considered as limitations on the present disclosure. Moreover, a same reference symbol is used throughout the accompanying drawings to represent a same component. In the drawings:
Fig. 1 is a flowchart of a method for receiving an OAM block according to an embodiment of the present disclosure;
Fig. 2 is a structural diagram of an OAM block;
Fig. 3 is an example diagram of a window according to an embodiment of the present disclosure;
Fig. 4 is a schematic diagram of a transmission pattern of different types of OAM blocks;
Fig. 5 is a structural diagram of a communication device according to an embodiment of the present disclosure;
Fig. 6 is another structural diagram of a communication device according to an embodiment of the present disclosure;
Fig. 7 is yet another structural diagram of a communication device according to an embodiment of the present disclosure.

### DETAILED DESCRIPTION

The exemplary embodiments of the present disclosure will be described in more detail below with reference to the accompanying drawings. Although the exemplary embodiments of the present disclosure are shown in the accompanying drawings, it should be understood that the present disclosure can be implemented in various forms and should not be limited by the embodiments set forth herein. On the contrary, these embodiments are provided in order to enable a more thorough understanding of the present disclosure and to fully convey the scope of the present disclosure to those skilled in the art.

Terms "first", "second" and the like in the specification and claims of the present disclosure are adopted not to describe a specific sequence or order but to distinguish similar objects. It should be understood that data used like this may be interchanged under a proper condition for implementation of the embodiments of the disclosure described herein in a sequence apart from those shown or described here. In addition, terms "include" and "have" and any variant thereof are intended to cover nonexclusive inclusions. For example, a process, method, system, product or equipment including a series of steps or units is not limited to those steps or units which are clearly listed, but may include other steps or units which are not clearly listed or intrinsic in the process, the method, the product or the equipment. The use of "and/or" in the specification and claims indicates at least one of the connected objects.

The following description provides examples and does not limit the scope, applicability, or configuration set forth in the claims. Changes may be made to the functions and arrangements of the elements discussed without departing from the spirit and scope of the present disclosure. Various examples may appropriately omit, replace, or add various procedures or components. For example, the described method may be performed in an order different from that described, and various steps may be added, omitted, or combined. In addition, the features described with reference to certain examples may be combined in other examples.

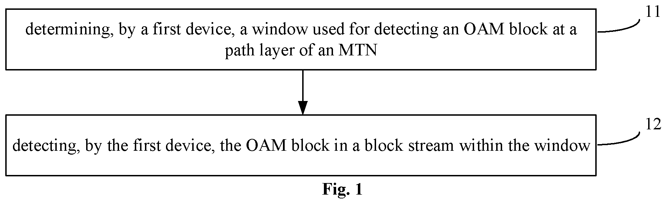

As described in the background section, in the related art, when detecting the OAM block at the path layer of the MTN, it is necessary to perform OAM block detection block by block on the block stream, which results in the large hardware resource required for detection and complex implementation. In order to solve at least one of the above problems, an embodiment of the present disclosure provides a method for receiving an Operation Administration and Maintenance (OAM) block, as shown in Fig. 1, the method includes the following steps.

Step 11: determining, by a first device, a window used for detecting the OAM block at a path layer of a Metro Transport Network (MTN).

In this context, the term "block" or "OAM block" refers to a 66-bit block generated using 66B coding technology. In the embodiment of the present disclosure, as compared to the method of detecting each block individually, it determines a detection window for the OAM module based on a possible location of the OAM block, which can also be called as a receiving window or a detection window.

Step 12: detecting, by the first device, the OAM block in a block stream within the window.

In the embodiment of the present disclosure, it detects the OAM module within the determined window, thereby avoiding the problem that the detection of the OAM in the block by block manner requires the large hardware resource and is complex to implement. Since the window is set based on the possible location of the OAM block, the embodiment of the present disclosure can achieve more efficient OAM block detection and reduce the processing resource required for detection.

In step 11, the first device determines the window based on the location of the detected OAM block and the period of the OAM block after at least one OAM block has been detected. Generally, in order to ensure the detection of at least one OAM block in the block stream, the first device needs to scan and recognize a duration of at least one period of the OAM block. The period of the OAM block refers to a transmission period of the OAM block.

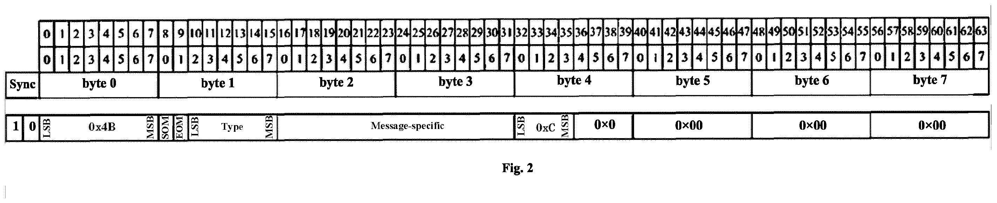

Before step 11, the first device performs, based on a control block field and an O code field, detection on the block stream in a block by block manner, to detect at least one OAM block. Specifically, the first device can perform OAM block detection on the block stream at the path layer of the MTN in a block by block manner. For example, the first device starts to look for the OAM block in a 66B block stream at the path layer of the MTN, and can identify the OAM block through 0x4B (control block field) and 0xC (O code field) of the 66B block, wherein the locations of 0x4B and 0xC are shown in Fig. 2.

In the embodiment of the present disclosure, after at least one OAM block has been detected in step 11, it can determine a window for detecting a periodicity of the OAM block based on the location of the detected OAM block and the period of the OAM block, wherein the window occurs periodically, and the period of the windows is equal to the period of the OAM block. Specifically, the location point where the OAM block occurs periodically can be determined based on the location of the detected OAM block and the period of the OAM block; then, it takes each time window that includes the location point as the window.

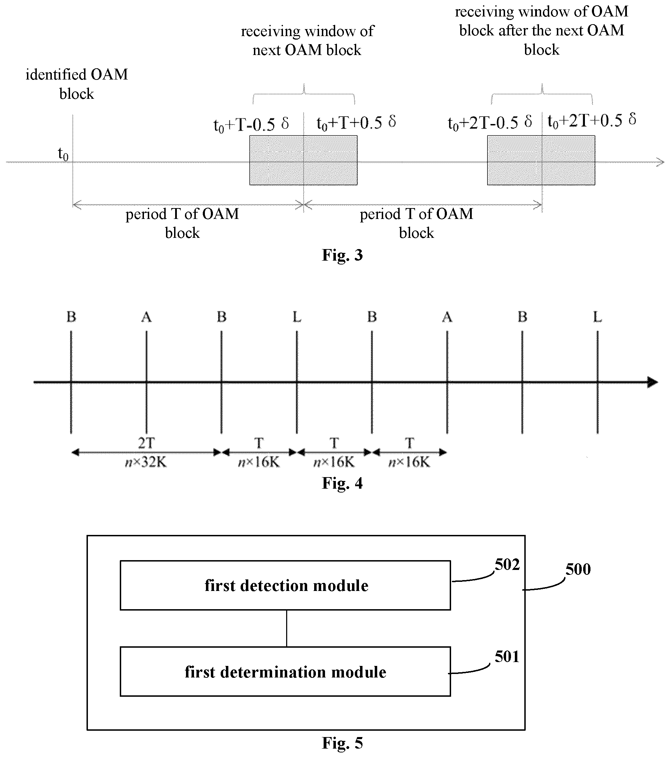

For example, after the first device identifies one or more OAM blocks (usually at least one or more periods of the OAM need to be scanned and identified), a window of a subsequent OAM block is determined based on the location of the currently identified OAM block and the period of the currently identified OAM block. Specifically, as shown in Fig. 3, it determines, based on the location of the identified OAM block, a location point distanced from the location of the identified OAM block by an integer multiple of the period T of the OAM block; and it generates, with respect to each location point, a window of a certain width including the location point. For example, as shown in Fig. 3, assuming that the OAM block is identified at location t₀ and a duration of the window is δ, the starting point of each subsequent window on the time axis is t₀+n*T-0.5δ, and the end point of which is t₀+n*T+0.5δ, wherein n is an integer greater than or equal to 1.

In the embodiment of the present disclosure, the duration of the window is related to the period of the OAM. For example, a length of the window is determined based on a preset proportion of the period of the OAM block, that is, the window size can be set to a certain percentage of the period of the OAM. For example, if the period of the OAM block is T, the window size is 5%T. In the case that the period of the OAM block changes, the location and/or the length of the window is adjusted based on the changed period of the OAM block.

In this way, in the above step 12, the first device can detect the OAM block from the block stream of the path layer of the MTN based on the determined window, that is, the OAM block is detected only within the window, and the OAM block is not detected outside the window. Specifically, in each window, the first device receives and identifies the OAM block. The OAM block can be identified by 0x4B (control block field) and 0xC (O code field) of the 66B block.

In the embodiment of the present disclosure, through the above steps, it can avoid the problems of the large hardware resource required for detection and complex implementation caused by detecting the OAM block in a block by block manner; since the window is set based on the possible location of the OAM block, it can achieve more effective OAM block detection and reduce the processing resource required for detection.

Furthermore, in the embodiment of the present disclosure, it can also identify different types of OAM blocks in step 12, such as a basic message block (basic message, also known as a B block), an APS (Automatic Protection Switching) message block (APS message, also known as an A block), and a CV (Connectivity Verification) message block (CV message) and a CS (Client Signal) message block (CS information) in a low priority message (an L block). As shown in Fig. 2, different types of OAM blocks can be identified by a type field in the 66B block. Specifically, the type field is located at the location of byte 1 in the 66B block.

In a practical application, the OAM block may be lost due to transmission or an equipment failure. In the embodiments of the present disclosure, with respect to the above scenarios, it can obtain a detection result of the OAM block in each window (for convenience of description, referred to as a first detection result herein), and the detection result is used to indicate whether the OAM block is detected in the corresponding window. In the case that the first detection result meets a first condition, an OAM loss defect is generated. Specifically, the first condition may include at least one of the followings.
1) A quantity of consecutive windows in which the OAM block is not detected reaches a first amount, wherein the first amount is an integer greater than or equal to 1.
   For example, the OAM block is not detected in m consecutive windows, wherein m is an integer greater than or equal to 1.
2) A quantity of windows in which the OAM block is not detected reaches a third amount within consecutive detection windows of a second amount, wherein both the third amount and the second amount are integers greater than or equal to 1, and the third amount is less than the second amount.
   For example, the OAM block is not detected in p windows out of q consecutive windows, wherein both q and p are integers greater than or equal to 1, and p is less than q.
3) No OAM block is detected within a first period.

The first period represents a preset period, and no OAM block is detected during this period.

In the embodiment of the present disclosure, after the OAM loss defect is declared, it can further obtain the detection result of the OAM block in each window (for convenience of description, referred to as a second detection result herein). In the case that the second detection result meets the second condition, the OAM loss defect is cleared. Specifically, the second condition may include at least one of the followings.
1) A quantity of consecutive windows in which the OAM block is detected reaches a fourth amount, wherein the fourth amount is an integer greater than or equal to 1.
   For example, the OAM block is detected in k consecutive windows, wherein k is an integer greater than or equal to 1.
2) A quantity of windows in which the OAM block is detected reaches a sixth amount within consecutive detection windows of a fifth amount, wherein the fifth amount and the sixth amount are both integers greater than or equal to 1, and the sixth amount is less than the fifth amount.
   For example, the OAM block is detected in z windows out of w consecutive windows, wherein w and z are both integers greater than or equal to 1, and z is less than w.
3) The OAM block is detected within a second period.

The second period also represents a preset period, and the OAM block is detected during this period.

In the embodiments of the present disclosure, the OAM block being detected indicates that the OAM block has been detected within the window, and a type of the detected OAM block matches a transmission pattern of the type of the OAM block. The OAM block being not detected indicates no OAM block has been detected within the window, or a type of the OAM block detected within the window does not match the transmission pattern of the type of the OAM block.

For example, if the type of the OAM block corresponding to a certain window is of the type of the B block based on the transmission pattern of the type of the OAM block, and if the B block is detected within the window, it determines that an OAM block is detected within the window; if no OAM block is detected within the window, or other type of OAM block is detected (that is, the detected OAM block is not the B block) within the window, it determines that no OAM block is detected within the window.

In the embodiment of the present disclosure, in addition to identifying and determining the type of the received OAM block within the window, the first device also determines whether the type of the received OAM block conforms to the transmission pattern of the type of the OAM block.

For example, as shown in Fig. 4, it assumes that a sending end MTN OAM sends the OAM block in the order of BABL, wherein B represents a B block, A represents an A block, and L represents an L block. If the type of the OAM block identified by the first device within a certain window does not conform to the expected sending sequence (transmission pattern), it determines that no OAM block is detected. For example, if a B block is detected within the window following a B block, it does not conform to the expectation.

Furthermore, in the embodiments of the present disclosure, it can also achieve a more refined loss defect of the OAM block for different types of the OAM blocks.

For example, with respect to a preset type of the OAM block, it obtains a third detection result of the preset type of the OAM block within each first window, wherein the first window is a window used for detecting the preset type of the OAM block. Specifically, the location of the first window can be determined based on the transmission pattern of the type of the OAM block. Then, the preset type of an OAM loss defect is declared when the third detection result meets a third condition.

Specifically, the third condition includes at least one of the followings:
1) that a quantity of consecutive first windows in which the preset type of the OAM block is not detected reaches a seventh amount, wherein the seventh amount is an integer greater than or equal to 1;
2) that a quantity of first windows in which the preset type of the OAM block is not detected reaches a ninth amount within consecutive first detection windows of an eighth amount, wherein both the eighth amount and the ninth amount are integers greater than or equal to 1, and the ninth amount is less than the eighth amount; or
3) that no preset type of OAM block is detected within a third period.

The third period represents a preset period, and no preset type of OAM block is detected during this preset period.

In the embodiments of the present disclosure, with respect to the preset type of the OAM block, it can also obtain a fourth detection result of the preset type of OAM block within each first window after declaring the preset type of the OAM loss defect, and clear the preset type of the OAM loss defect when the fourth detection result meets a fourth condition.

Specifically, the fourth condition includes at least one of the followings:
1) that a quantity of consecutive first windows in which the preset type of the OAM block is detected reaches a tenth amount, wherein the tenth amount is an integer greater than or equal to 1;
2) that a quantity of first windows in which the preset type of the OAM block is detected reaches a twelfth amount within consecutive first detection windows of an eleventh amount, wherein the eleventh amount and the twelfth amount are both integers greater than or equal to 1, and the twelfth amount is less than the eleventh amount; or
3) that the preset type of the OAM block is detected within a fourth period.

The fourth period represents a preset period, and the preset type of OAM block is detected during this preset period.

In the embodiments of the present disclosure, with respect to different types of the OAM blocks, respective conditions for detecting OAM block loss are the same or different. For example, the third period for the A block can be the same or different from the third period for the B block.

In the embodiments of the present disclosure, through the above steps, it can declare an OAM loss defect (defect) when the OAM block is not detected within a certain period of time, or multiple OAM blocks are not detected. It is also possible to declare, based on different OAM types, the respective loss defects for a basic message, an APS message, a CV messages, a CS message, etc. For example, when a basic message OAM block is not detected within a certain period of time, or multiple basic message OAM blocks are not detected, a basic message OAM loss defect (basic message defect) is declared. With respect to different types of the OAM blocks, a time for detecting loss can be the same or different. After the loss defect is declared, when an OAM block is subsequently detected within the window or multiple OAM blocks are detected continuously, the loss defect is cleared. If it is a defects that distinguishes different types of the OAM block, it is necessary to detect and clear them separately.

From the above, it can be seen that the embodiments of the present disclosure fully utilizes a characteristic of periodic transmission of the OAM block at the path layer of the MTN and a characteristic of a block frame format, and enables the reception detection to be more effective and consume less processing resource.

The above are about various methods of the embodiments of the present disclosure. In the following, it further provides an apparatus for implementing the above methods.

Refer to Fig. 5, the embodiment of the present disclosure also provide a communication device 500, including:
a first determination module 501, configured to determine a window used for detecting an Operation Administration and Maintenance (OAM) block at a path layer of a Metro Transport Network (MTN);
a first detection module 502, configured to detect the OAM block in a block stream within the window.

Optionally, the first determination module is further configured to determine the window based on a location of the detected OAM block and a period of the OAM block after at least one OAM block has been detected.

Optionally, the first determination module is further configured to determine a location point of the OAM block based on the location of the detected OAM block and the period of the OAM block; and take each time window that includes the location point as the window, wherein the location point occurs periodically.

Optionally, a length of the window is determined based on a preset proportion of a period of the OAM block.

Optionally, the communication device further includes:
a first adjustment module, configured to adjust a location and/or a length of the window based on the changed period of the OAM block in the case that a period of the OAM block changes.

Optionally, the communication device further includes:
a second detection module, configured to perform detection on the block stream in a block by block manner based on a control block field and an O code field, to detect at least one OAM block before determining the window used for detecting the OAM block at the path layer of the MTN.

Optionally, the communication device further includes:
a first defect module, configured to obtain a first detection result of the OAM block within each window, and declare an OAM loss defect when the first detection result meets a first condition.

Optionally, the first condition includes at least one of the followings:
that a quantity of consecutive windows in which the OAM block is not detected reaches a first amount;
that a quantity of windows in which the OAM block is not detected reaches a third amount within consecutive detection windows of a second amount, wherein the third amount is less than the second amount; or
that no OAM block is detected within a first period.

Optionally, the communication device further includes:
a first clearing module, configured to obtain a second detection result of the OAM block within each window after declaring the OAM loss defect, and clear the OAM loss defect when the second detection result meets a second condition.

Optionally, the second condition includes at least one of the followings:
that a quantity of consecutive windows in which the OAM block is detected reaches a fourth amount;
that a quantity of windows in which the OAM block is detected reaches a sixth amount within consecutive detection windows of a fifth amount, wherein the sixth amount is less than the fifth amount; or
that the OAM block is detected within a second period.

Optionally, the OAM block being detected indicates that the OAM block has been detected within the window, and a type of the detected OAM block matches a transmission pattern of the type of the OAM block;
the OAM block being not detected indicates that no OAM block has been detected within the window, or a type of the OAM block detected within the window does not match the transmission pattern of the type of the OAM block.

Optionally, the communication device further includes:
a second defect module configured to, with respect to a preset type of the OAM block, obtain a third detection result of a preset type of a OAM block within each first window, wherein the first window is a window used for detecting the preset type of the OAM block; and declare a preset type of an OAM loss defect when the third detection result meets a third condition.

Optionally, the third condition includes at least one of the followings:
that a quantity of consecutive first windows in which the preset type of the OAM block is not detected reaches a seventh amount;
that a quantity of first windows in which the preset type of the OAM block is not detected reaches a ninth amount within consecutive first detection windows of an eighth amount, wherein the ninth amount is less than the eighth amount; or
that no preset type of OAM block is detected within a third period.

Optionally, the communication device further includes:
a second clearing module configured to, with respect to a preset type of the OAM block, obtain a fourth detection result of the preset type of OAM block within each first window after declaring the preset type of the OAM loss defect, and clear the preset type of the OAM loss defect when the fourth detection result meets a fourth condition.

Optionally, the fourth condition includes at least one of the followings:
that a quantity of consecutive first windows in which the preset type of the OAM block is detected reaches a tenth amount;
that a quantity of first windows in which the preset type of the OAM block is detected reaches a twelfth amount within consecutive first detection windows of an eleventh amount, wherein the twelfth amount is less than the eleventh amount; or
that the preset type of the OAM block is detected within a fourth period.

Optionally, with respect to different types of the OAM blocks, respective conditions for detecting OAM block loss are the same or different.

It should be noted that the device in the embodiments is a device corresponding to the above methods, and the implementation methods in the above embodiments are all applicable to the embodiments of the device, and can also achieve the same technical effect. The above-mentioned device provided by the embodiments of the present disclosure can implement all the method steps implemented by the above-mentioned method embodiments, and can achieve the same technical effect. The parts and beneficial effects of the embodiments that are the same as the method embodiments will not be repeated herein in details.

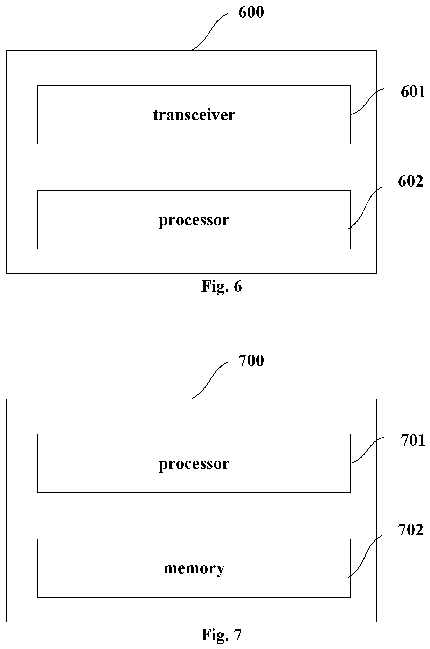

Refer to Fig. 6, the embodiment of the present disclosure also provides a communication device 600, including: a transceiver 601 and a processor 602;
the processor 602, configured to determine a window used for detecting the OAM block at a path layer of a Metro Transport Network (MTN);
the transceiver 601, configured to detect the OAM block in a block stream within the window.

Optionally, the processor is also configured to determine the window based on a location of the detected OAM block and a period of the OAM block after at least one OAM block has been detected.

Optionally, the processor is also configured to determine a location point of the OAM block based on the location of the detected OAM block and the period of the OAM block; and take each time window that includes the location point as the window, wherein the location point occurs periodically.

Optionally, a length of the window is determined based on a preset proportion of a period of the OAM block.

Optionally, the processor is also configured to adjust a location and/or a length of the window based on the changed period of the OAM block in the case that a period of the OAM block changes.

Optionally, before the determining the window used for detecting the OAM block at the path layer of the MTN, the processor is also configured to perform detection on the block stream in a block by block manner based on a control block field and an O code field, to detect at least one OAM block.

Optionally, the processor is also configured to obtain a first detection result of the OAM block within each window, and declare an OAM loss defect when the first detection result meets a first condition.

Optionally, the first condition includes at least one of the followings:
that a quantity of consecutive windows in which the OAM block is not detected reaches a first amount;
that a quantity of windows in which the OAM block is not detected reaches a third amount within consecutive detection windows of a second amount, wherein the third amount is less than the second amount; or
that no OAM block is detected within a first period.

Optionally, the processor is also configured to obtain a second detection result of the OAM block within each window after declaring the OAM loss defect, and clear the OAM loss defect when the second detection result meets a second condition.

Optionally, the second condition includes at least one of the followings:
that a quantity of consecutive windows in which the OAM block is detected reaches a fourth amount;
that a quantity of windows in which the OAM block is detected reaches a sixth amount within consecutive detection windows of a fifth amount, wherein the sixth amount is less than the fifth amount; or
that the OAM block is detected within a second period.

Optionally, the OAM block being detected indicates that the OAM block has been detected within the window, and a type of the detected OAM block matches a transmission pattern of the type of the OAM block;
the OAM block being not detected indicates that no OAM block has been detected within the window, or a type of the OAM block detected within the window does not match the transmission pattern of the type of the OAM block.

Optionally, the processor is also configured to, with respect to the preset type of the OAM block, obtain a third detection result of the preset type of the OAM block within each first window, wherein the first window is a window used for detecting the preset type of the OAM block; and declare a preset type of an OAM loss defect when the third detection result meets a third condition.

Optionally, the third condition includes at least one of the followings:
that a quantity of consecutive first windows in which the preset type of the OAM block is not detected reaches a seventh amount;
that a quantity of first windows in which the preset type of the OAM block is not detected reaches a ninth amount within consecutive first detection windows of an eighth amount, wherein the ninth amount is less than the eighth amount; or
that no preset type of OAM block is detected within a third period.

Optionally, the processor is also configured to, with respect to the preset type of the OAM block, obtain a fourth detection result of the preset type of the OAM block within each first window after declaring the preset type of the OAM loss defect; and clear the preset type of the OAM loss defect when the fourth detection result meets a fourth condition.

Optionally, the fourth condition includes at least one of the followings:
that a quantity of consecutive first windows in which the preset type of the OAM block is detected reaches a tenth amount;
that a quantity of first windows in which the preset type of the OAM block is detected reaches a twelfth amount within consecutive first detection windows of an eleventh amount, wherein the twelfth amount is less than the eleventh amount; or
that the preset type of the OAM block is detected within a fourth period.

Optionally, with respect to different types of the OAM blocks, respective conditions for detecting OAM block loss are the same or different.

It should be noted that the device in the embodiments is a device corresponding to the above methods, and the implementation methods in the above embodiments are all applicable to the embodiments of the device, and can also achieve the same technical effect. The above-mentioned device provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

Refer to Fig. 7, the embodiment of the present disclosure also provides a communication device 700, including a processor 701, a memory 702, and a computer program stored in the memory 702 and used to be executed by the processor 701. The processor 701 is configured to execute the computer program to implement the various steps of the above-mentioned method embodiments for receiving an OAM block, and the same technical effect can be achieved. To avoid redundancy, further details are not repeated herein.

The embodiment of the present disclosure also provides a computer-readable storage medium storing a computer program. The processor is configured to execute the computer program to implement the various steps of the above-mentioned method embodiments for receiving an OAM block, and the same technical effect can be achieved. To avoid redundancy, further details are not repeated herein. The computer-readable storage medium includes: Read-Only Memory (ROM), Random Access Memory (RAM), magnetic disk or optical disc, etc.

It should be noted that, terms "include" or "including" or any other variations involved in the present disclosure are intended to cover nonexclusive inclusions, so that a process, method, product or equipment including a series of steps or units is not limited to those steps or units which are clearly listed, but may include other steps or units which are not clearly listed or intrinsic in the process, the method, the product or the equipment. Without further limitations, an element limited by the phrase "includes a..." does not exclude the presence of additional identical elements in the process, method, product, or device that includes the described element.

Through the descriptions of the above embodiments, those skilled in the art can clearly understand that the embodiment method can be implemented with software plus the necessary general hardware platform. Obviously, it can also be implemented by hardware, but in many cases the former is a better implementation. Based on such an understanding, essential parts, or parts contributing to the related art, of the technical solution of the present disclosure may be implemented in a form of a software product. The computer software product is stored in a storage medium (such as ROM/RAM, magnetic disk, optical disk), and includes instructions to cause a terminal (which can be a mobile phone, a computer, a server, an air conditioner or a network device, etc.) to execute the methods described in various embodiments of the present disclosure.

It can be understood that the embodiments described in the present disclosure can be implemented in hardware, software, firmware, middleware, microcode, or a combination thereof. For hardware implementation, modules, units, sub-modules, subunits, etc., can be implemented in one or more Application Specific Integrated Circuits (ASICs), Digital Signal Processors (DSPs), Digital Signal Processing Devices (DSPDs), Programmable Logic Devices (PLDs), Field-Programmable Gate Arrays (FPGAs), general-purpose processors, controllers, microcontrollers, microprocessors, or other electronic units or a combination thereof used to perform functions described in the present disclosure.

The above description of the embodiments of the present disclosure is provided in conjunction with the accompanying drawings, but the present disclosure is not limited to the above-mentioned detailed description. The detailed description above is merely illustrative and not restrictive. Those skilled in the art, inspired by the present disclosure, can make many forms without departing from the spirit of the present disclosure and the scope of the claims, all of which fall within the protection scope of the present disclosure.

## Claims

1. A method for receiving an Operation Administration and Maintenance (OAM) block, comprising:
determining, by a first device, a window used for detecting the OAM block at a path layer of a Metro Transport Network (MTN);
detecting, by the first device, the OAM block in a block stream within the window.

2. The method according to claim 1, wherein the determining, by the first device, the window used for detecting the OAM block at the path layer of the MTN comprises:
after the first device has detected at least one OAM block, determining, by the first device, the window based on a location of the detected OAM block and a period of the OAM block.

3. The method according to claim 2, wherein the determining the window based on the location of the detected OAM block and the period of the OAM block comprises:
determining a location point of the OAM block based on the location of the detected OAM block and the period of the OAM block; taking each time window that comprises the location point as the window, wherein the location point occurs periodically.

4. The method according to claim 1, wherein a length of the window is determined based on a preset proportion of a period of the OAM block.

5. The method according to claim 1, further comprising:
in the case that a period of the OAM block changes, adjusting a location and/or a length of the window based on the changed period of the OAM block.

6. The method according to claim 1, wherein before the determining the window used for detecting the OAM block at the path layer of the MTN, the method further comprising:
performing, by the first device based on a control block field and an O code field, detection on the block stream in a block by block manner, to detect at least one OAM block.

7. The method according to claim 1, further comprising:
obtaining a first detection result of the OAM block within each window;
declaring an OAM loss defect when the first detection result meets a first condition.

8. The method according to claim 7, wherein the first condition comprises at least one of the followings:
that a quantity of consecutive windows in which the OAM block is not detected reaches a first amount;
that a quantity of windows in which the OAM block is not detected reaches a third amount within consecutive detection windows of a second amount, wherein the third amount is less than the second amount; or
that no OAM block is detected within a first period.

9. The method according to claim 7, wherein after declaring the OAM loss defect, the method further comprising:
obtaining a second detection result of the OAM block within each window;
clearing the OAM loss defect when the second detection result meets a second condition.

10. The method according to claim 9, wherein the second condition comprises at least one of the followings:
that a quantity of consecutive windows in which the OAM block is detected reaches a fourth amount;
that a quantity of windows in which the OAM block is detected reaches a sixth amount within consecutive detection windows of a fifth amount, wherein the sixth amount is less than the fifth amount; or
that the OAM block is detected within a second period.

11. The method according to any one of claims 7-10, further comprising:
the OAM block being detected indicates that the OAM block has been detected within the window, and a type of the detected OAM block matches a transmission pattern of the type of the OAM block;
the OAM block being not detected indicates that no OAM block has been detected within the window, or a type of the OAM block detected within the window does not match the transmission pattern of the type of the OAM block.

12. The method according to claim 1, further comprising:
with respect to a preset type of the OAM block, obtaining a third detection result of the preset type of the OAM block within each first window, wherein the first window is a window used for detecting the preset type of the OAM block;
declaring a preset type of an OAM loss defect when the third detection result meets a third condition.

13. The method according to claim 12, wherein the third condition comprises at least one of the followings:
that a quantity of consecutive first windows in which the preset type of the OAM block is not detected reaches a seventh amount;
that a quantity of first windows in which the preset type of the OAM block is not detected reaches a ninth amount within consecutive first detection windows of an eighth amount, wherein the ninth amount is less than the eighth amount; or
that no preset type of OAM block is detected within a third period.

14. The method according to claim 12, wherein after declaring the preset type of the OAM loss defect, the method further comprising:
with respect to the preset type of the OAM block, obtaining a fourth detection result of the preset type of the OAM block within each first window;
clearing the preset type of the OAM loss defect when the fourth detection result meets a fourth condition.

15. The method according to claim 14, wherein the fourth condition comprises at least one of the followings:
that a quantity of consecutive first windows in which the preset type of the OAM block is detected reaches a tenth amount;
that a quantity of first windows in which the preset type of the OAM block is detected reaches a twelfth amount within consecutive first detection windows of an eleventh amount, wherein the twelfth amount is less than the eleventh amount; or
that the preset type of the OAM block is detected within a fourth period.

16. The method according to claim 15, wherein with respect to different types of the OAM blocks, respective conditions for detecting OAM block loss are the same or different.

17. A communication device, comprising:
a first determination module, configured to determine a window used for detecting an Operation Administration and Maintenance (OAM) block at a path layer of a Metro Transport Network (MTN);
a first detection module, configured to detect the OAM block in a block stream within the window.

18. A communication device, comprising: a processor, a memory, and a program stored in the memory and used to be executed by the processor, wherein the processor is configured to execute the program to implement the steps of the method according to any one of claims 1 to 16.

19. A computer-readable storage medium storing a computer program, wherein the computer program is used to be executed by a processor to implement the steps of the method according to any one of claims 1 to 16.
